# EUROPEAN PATENT SPECIFICATION

(11) **EP 2 568 648 B1**
(45) Date of publication and mention of the grant of the patent: **06.11.2019**
(21) Application number: 11180527.1
(22) Date of filing: 08.09.2011
(51) Int. Cl.: H04L 1/00, H04L 1/18

(54) **Method and system for minimizing collisions of messages responsive to multi- or broadcast messages in a radio communication system**
Verfahren und System zur Minimierung von Kollisionen von Mitteilungen, die auf Multi- oder Broadcast-Mitteilungen in einem Funkkommunikationssystem reagieren
Procédé et le system pour minimiser les collisions de messages sensibles aux messages multiples ou de diffusion dans un système de communication radio

(43) Date of publication of application: 13.03.2013
(73) Proprietor: Vodafone Holding GmbH, 40213 Düsseldorf (DE)
(72) Inventor: Nitzold, Walter, 01309 Dresden (DE); Fettweis, Gerhard, 01326 Dresden (DE); Gill, Trevor, Reading, Berkshire RG31 6FN (GB); Krone, Stefan, 01279 Dresden (DE)
(74) Representative: KNH Patentanwälte Neumann Heine Taruttis PartG mbB

(56) References cited:
- WO-A1-2011/099479
- US-A1- 2008 028 280
- US-A1- 2010 177 713
- BYERS J W ET AL: "A DIGITAL FOUNTAIN APPROACH TO RELIABLE DISTRIBUTION OF BULK DATA", COMPUTER COMMUNICATION REVIEW, ACM, NEW YORK, NY, US, vol. 28, no. 4, 1 October 1998 (1998-10-01), pages 56-67, XP000914424, ISSN: 0146-4833, DOI: 10.1145/285243.285258

## Description

The invention relates to a method and a corresponding system for minimizing collisions of messages responsive to multicast or broadcast messages in a radio communication system.

Traditional radio communication systems, i.e. so-called mobile communication systems, typically comprise a cellular network and mobile terminals. On the wired network side the cellular network typically is coupled to the fixed-line telephone system and the internet to connect the mobile terminals to the conventional fixed-line telephone system, the so-called plain old telephone system POTS, and the internet. On the other side, i.e. the air interface side, the cellular network provides an air interface, i.e. a radio interface, in order to connect to mobile terminals via a radio link.

In the following cell phones or personal digital assistants (PDAs) or any other station coupled via a radio link to the mobile communications system, and which typically are called cell phones or mobile stations or mobile nodes or user equipment (UE) in the prior art, are called terminals. In contrast thereto fixed communication stations implementing the air interface, i.e. the radio link, from the network system to mobile terminals, and which for example are called base stations in a GSM system or eNodeBs in the LTE terminology are called access stations in the following, since they provide access to the communication network.

These conventional mobile communication systems, for example systems according to the GSM standard or systems according to the LTE specification, employ time slotted communication protocols. A resource, i.e. for example a particular frequency band within a cell, is divided into a plurality of time slots, short slots. A time slot is the smallest individual period of time dedicated to transmit to or receive a burst of symbols from a terminal. A time slot for example can be assigned to a particular terminal and specifies a time span of predefined duration, in which the access station may transmit data to or receive data from that particular terminal. Furthermore an available frequency range may be divided into a plurality of parallel frequency bands, wherein each of the comparatively narrow frequency bands may be divided into a plurality of time slots. A time slot of a frequency band in the following is called a resource unit. In this way the available frequency range may be divided into a grid of resource units as known for example from the GSM or LTE specification.

Since in conventional radio systems transmissions in the same frequency band and at the same time may interfere with each other, each transmitter of the system must ensure that it uses the assigned time slots of an assigned frequency band only. For example, when a telephone call to or from a terminal is established, am access station may assign one time slot in a frame of slots for transmitting data from the access station to the mobile terminal, i.e. downlink, using a first frequency band and one time slot of a frame in a second and different frequency band for receiving data from the mobile terminal at the access station, i.e. uplink. The mobile terminal accordingly has to listen to the dedicated downlink frequency exactly during the assigned time slot to receive data related to the established telephone call. Conversely the mobile terminal must use exactly the assigned time slot to transmit data to the access station.

Alternatively and instead of being assigned to only one terminal for communication, a time slot of a particular frequency can be used to broadcast information to a plurality of terminals or to send a multicast message addressed to more than one terminal.

In today's mobile communication systems a considerable amount of so-called machine-to-machine terminals are used. These machine terminals typically are equipped with low cost and energy saving hardware to enable long lifetime scenarios while operating on batteries. To enable data exchange with machine terminals without providing each machine terminal with soft- and hardware to comply with at least one of the above mentioned conventional specifications, an enhanced communication method is required. In particular an enhanced method for transmitting multicast messages is needed, which takes account of the particular properties of machine terminals 120b, wherein collisions of uplink reply messages are minimized.

US 2010/0177713 A1 describes a mobile station capable of increasing the use efficiency of a transmission resource. The mobile station includes a line quality measuring unit, which measures SINR of a pilot symbol; a CQI generation unit, which generates a CQI corresponding to the SINR; and a resource allocation unit allocates a subcarrier corresponding to the content of an inputted CQI among a plurality of subcarriers (i.e. a plurality of resources) to the CQI according to a common reference table in a plurality of mobile stations. Accordingly, in a plurality of mobile stations, the CQI having the same content are mapped to the same subcarrier, thus saving uplink resources.

Further, WO 2011/099479 A1 discloses a mobile station device communicating with a base station device, wherein a contention based signals are used.

The invention is defined by the appended claims. The embodiments not falling to the scope of the invention shall be treated as examples suitable for understanding the invention.

### Brief description of the figures

The invention described in more detail below is shown in the following figures, wherein
- Fig. 1: depicts a schematic illustrating a mobile communication system;
- Fig. 2: depicts a flow chart illustrating a method performed in an access station;

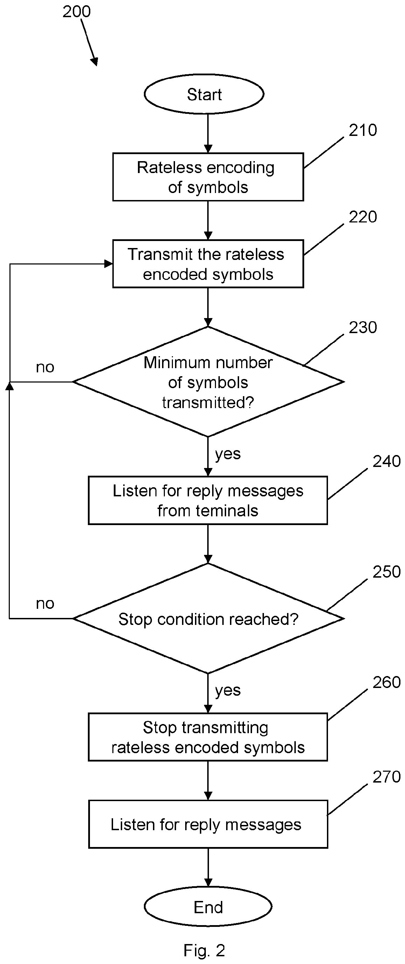

- Fig. 2: depicts a flow chart illustrating a method performed in a terminal;

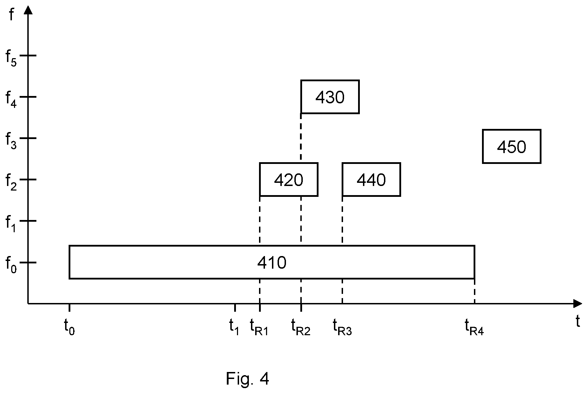

- Fig. 4: depicts a timing diagram of message transmissions.

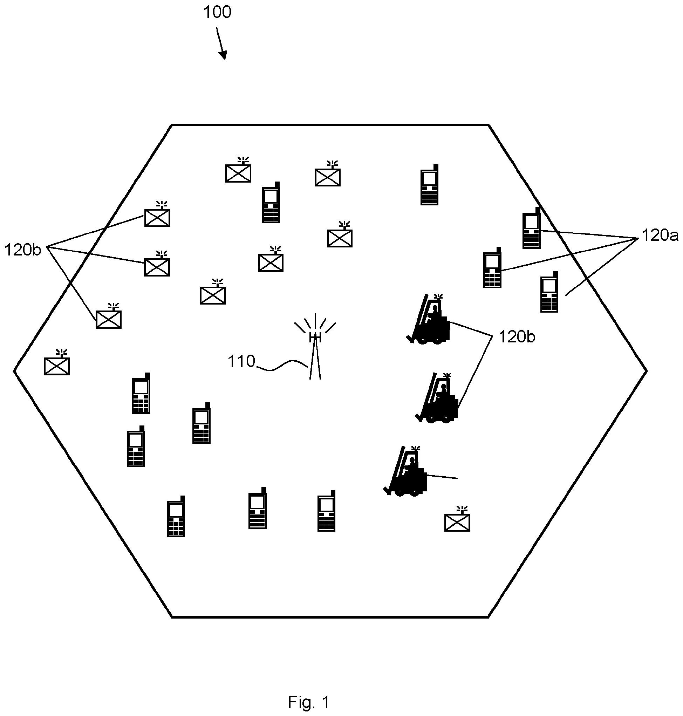

Fig. 1 depicts a mobile communication system 100, in particular one cell of a cellular radio communication system, wherein the cell comprises an access station 110.

Note that in the following the term access station shall be the generic term for a radio access station, which in GSM terms is called base station or in UMTS terms a nodeB or in LTE terminology an eNodeB, which provides the air interface to the radio terminals. The area of each cell is defined by the area covered by the at least one access station 110 comprised and located somewhere in the cell. Note that although the invention is described in the following for one cell of a cellular radio communication system, the invention is not limited in this regard.

Terminals 120 are communicatively connected by a radio link to the access station 110 of the cell, which in turn can be communicatively coupled to a network. A terminal can be a cell phone or PDA or a laptop computer or a less sophisticated machine terminal, which is adapted and configured to exchange data using the mobile communication system. Note that in the following a PDA or laptop computer, i.e. terminals providing a typical interface for human interaction, may be denoted by reference numeral 120a. Machine terminals, i.e. less sophisticated terminals, which do not necessarily provide a comfortable interface for human operation are denoted by reference numeral 120b. The group of all terminals, i.e. the joint group of terminals 120a and terminals 120b may be denoted jointly by reference numeral 120.

In one embodiment the less complex terminals may be devices for so-called machine-to-machine communication, i.e. communication between two machine devices. A machine terminal 120b may act as an autonomous device according to a predefined schedule or program. Alternatively a terminal 120b may communicate as a reaction to a predefined event, for example when requested by another machine. In one embodiment a machine terminal 120b may be a gauging station comprising a sensor for collecting information over a predefined time period or may collect data at any one moment in time, which may be transmitted to a central server station for further processing. Alternatively a machine terminal 120b may be coupled to or may form an integral part of a bigger machine, wherein the machine terminal may be adapted and configured for receiving or transmitting information related to the bigger machine. In this embodiment the machine terminal may be adapted for receiving instructions to control the bigger machine or for transmitting information indicating the status of the bigger machine, for example when raising an alarm.

As mentioned above the use of resource units is coordinated among the plurality of terminals to avoid interferences when transmitting downlink or uplink messages, i.e. from an access station to a terminal or from a terminal to an access station, respectively. This is typically handled by the access station, which manages the allocation of resource units for the communication cell that it serves.

Access station 110 may transmit a broadcast or multicast message to a plurality of at least two terminals 120, i.e. downlink, which in one embodiment may be machine terminals 120b. The multi- or broadcast message may be of arbitrary contents. In one embodiment the message may be of larger size, i.e. a message that is transmitted in a plurality of packets transmitted consecutively in time. In one embodiment the multi- or broadcast message may be transmitted by the access station in a plurality of resource units, wherein the transmission uses at least a portion of resource units arranged consecutively in time.

As mentioned above a problem arises when said downlink multi- or broadcast message is replied to by the terminals, wherein the terminals are not explicitely assigned to orthogonal uplink resources. The latter would inherently avoid collision of reply messages but requires additional downlink signalling that assigns these access slots to each of the respective terminals. This additional signalling can be reduced or omitted when the terminals randomly access the available uplink resources for the transmission of their reply messages. When a plurality of terminals transmits messages in reply to the multi- or broadcast message to the access station and the terminals use the same resource units, the plurality of reply messages superimpose at the access station, i.e. at the receiver, thus complicating successful reception of the reply messages or even preventing the access station from successful reception.

In particular machine terminals 120b may cause this problem, since these machine terminals may not be adapted and configured for preventing destructive superposition of uplink transmissions. Machine terminals 120b may be adapted and configured to communicate using less sophisticated communication protocols, i.e. the machine terminals may transmit asynchronously and without negotiating the uplink resource to be used with the base station before every data transmission in order to save energy. In one embodiment a machine terminal can be adapted and configured to receive transmissions at one predefined frequency at a predefined time, thus requiring the machine terminal to listen for any messages transmitted at that defined time on the defined frequency while allowing to suspend communication in between. Similarly a machine terminal may be configured and adapted to transmit a message at a predefined time and at a predefined frequency. Considering now that a plurality of machine terminals 120b reply to a multi- or broadcast message, the problem of superimposing messages increases due to a huge number of reply messages transmitted by the machine terminals uncoordinatedly.

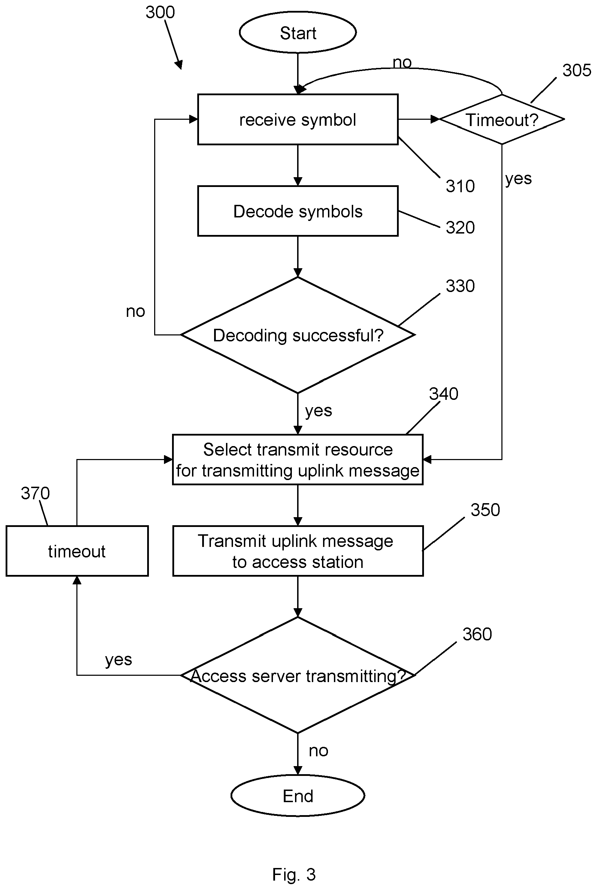

Figures 2 and 3 depict flow charts of a method to reduce said problem of a possible collision of a huge number of reply messages responsive to a multi- or broadcast message. Fig. 2 depicts one embodiment of the method performed in an access station 110, and figure 3 depicts the method steps performed in a terminal wherein the terminal is communicatively coupled to said access station.

As will become clear in the following the method steps as described for one terminal 120 may be performed in a plurality of terminals when receiving and processing the multi- or broadcast message transmitted by access station 110.

Method 200 may start when a message is to be sent to a plurality of terminals 120, in particular to a plurality of machine terminals 120b. However, note that the method and system is not limited to machine terminals 120b, but can also be implemented in conventional terminals 120a.

A message to be sent as multi- or broadcast message may be of arbitrary contents. Considering in particular machine terminals 120b, the message to be transmitted can, e.g., be a part of a software update or any other data, wherein each recipient shall reply to that message once the message has been decoded successfully.

At step 210 the access station optionally may encode the message to produce encoded symbols representing the message, wherein the encoding scheme may be a rateless encoding scheme or a repetition code. Although the description in the following particularly comprises the step of encoding the message, it is noted that encoding is an advantageous option only, but not a necessity. In one particular embodiment the message can be transmitted as a multi- or broadcast message without rateless or repetition encoding, i.e. method step 210 is omitted.

When using a repetition code the source symbols are transmitted more than one time. In one embodiment the encoder simply repeats a particular bit or symbol a number of times to the modulator, so the modulator repeatedly transmits the same symbol. In an alternative embodiment the source symbols are transmitted one by one without direct repetition, but wherein the entirety of source symbols is transmitted at least a second time after the first transmission.

So-called rateless codes are codes for a potentially limitless sequence of encoded symbols that can be generated from a limited set of original source symbols, wherein the original source symbols can be recovered from any subset of encoded symbols, said subset of encoded symbols being equal to or slightly larger than the original number of source symbols. A rateless code accordingly does not exhibit the property of a fixed code rate.

Rateless codes have been introduced as so-called LT codes by M. Luby in 2002, or as so-called raptor-codes by A. Shokrollahi in 2006.

By exploiting the special property of a rateless code an original set of symbols can be decoded from any subset of encoded symbols, i.e. a received subset of encoded symbols, if the number of received rateless encoded symbols exceeds a threshold. Hence, a receiver does not need to receive each encoded symbol successfully but only needs to successfully receive a minimum number of rateless encoded symbols, i.e. a subset of a minimum number of the theoretically limitless sequence of encoded symbols, to be able to decode all of the original limited sequence of symbols.

In the following example an encoding of the message using a rateless code is assumed without limiting the invention thereto.

In step 220 the access station starts to transmit the rateless encoded symbols representing the message, i.e. station 110 transmits the encoded symbols. Note that the transmission may begin at a scheduled time that is agreed with at least one terminal 120b. However, since a terminal 120 is capable of decoding the message if the number of successfully received rateless encoded symbols exceeds a threshold, there is no need to synchronize the beginning of the transmission with the terminals exactly. If a terminal misses a symbol or a burst of symbols there is no need for the terminal to listen for that missed symbol/burst due to the rateless encoding. Basically a terminal may start receiving at any time with respect to the beginning of the transmission of rateless encoded symbols.

The access station may transmit the rateless encoded message using a protocol as agreed with terminals 120b, i.e. using the agreed frequency and modulation method etc. of the protocol agreed with terminals 120b. At the same time, i.e. while transmitting the rateless encoded message, the access station may communicate with terminals 120a, i.e. conventional cell phones or the like, using a different communication protocol, i.e. such as defined and standardized for the GSM or GPRS or UMTS system or the like. The communication protocol used for transmitting the rateless encoded message may differ significantly from the communication protocol used for communicating with terminals 120a. In one embodiment the communication protocol agreed with terminals 120b is significantly less complex to account for the less complex hardware of machine terminals. Furthermore the transmission of the rateless encoded message may be at least asynchronous in time to the communication of the access station with terminals 120a.

With respect to figure 3 method 300 performed in a terminal 120 may start at any time.

Since a rateless encoding of the transmitted symbols is assumed as mentioned above, rateless encoded symbols are received at the terminals.

In step 310 the terminal receives a rateless encoded symbol. Note that while the terminal waits for receiving a next symbol, it checks in 305 whether a timeout condition is met. In that case, i.e. the terminal has been waiting too long, the terminal may exit the loop of receiving symbols, wherein the terminal optionally may exit via 340 transmit a corresponding reply message indicating the timeout to the access station.

Subsequently, i.e. in step 320, the terminal tries to decode the rateless encoded symbols received so far and verifies in step 330, whether the decoding has been successful, i.e. if the original message could be decoded successfully from the number of received symbols. Note that in case the message is transmitted without any encoding step 320 can be omitted.

The check for a successful decoding can be performed for example by computing a cyclic redundancy checksum (CRC) comprised in the message.

If the check for successful decoding reveals an unsuccessful attempt, the terminal continues with step 310, i.e. the terminal receives at least one more rateless encoded symbol of the message to be transmitted.

The loop of receiving a rateless encoded symbol, decoding the message from the set of received symbols and checking for successful decoding, i.e. the loop comprising method steps 310 to 330, continues until the check for successful decoding indicates that the original message has been transmitted successfully from access station 110 to terminal 120.

Alternatively the loop terminates if an alternative loop stop condition is met. In one embodiment that condition can be a timeout 305, i.e. the terminal expects to receive a packet or burst of the rateless encoded message but does not receive that within a scheduled time interval, e.g. when the access server has stopped transmitting. In that case the method performed at the terminal may optionally proceed with step 340, i.e. the selection of a transmit resource for transmitting a corresponding information message uplink to the base station. Alternatively the method performed at the terminal may terminate without transmitting an uplink message to the access station, so the access station may conclude an unsuccessful reception for that non-replying terminal.

When the check for successful decoding in step 330 indicates successful transmission, the terminal selects one of a plurality of uplink transmit resources for transmitting a reply message from terminal 120 to the access station 110. The available set of uplink transmit resources has been agreed with the access station beforehand, so the access station is aware on what resources a reply message may be transmitted.

In one embodiment the set of agreed uplink transmit resources may comprise a set of frequency bands, each allocated for a time interval in which a terminal may transmit its respective reply message. Accordingly a terminal may select one frequency band from that set for transmitting its respective reply message uplink.

Alternatively the set of uplink transmit resources may specify at least one time interval for one frequency band, so a terminal can only select an instant of time when to start transmitting its reply message on the one agreed uplink frequency band for its reply transmission.

In another embodiment the uplink transmit resources may additionally or alternatively comprise a set of orthogonal code-division-multiple-access (CDMA) codes, from which a terminal may select. Note that in one embodiment any combination of a frequency band and/or selecting an instant of time for transmitting and/or a CDMA code may be selected by a terminal from transmitting its respective reply message.

In one embodiment the total amount of uplink resource can be scaled according to the number of terminals that transmit a reply message to one access station. If only very few reply messages are expected at an access station, then it is sufficient to allocate few uplink resources. In contrast thereto if a huge number of reply messages are expected then more uplink resources can be allocated to provide more options for each terminal to select an uplink resource in order to minimize collisions of reply messages. The total of allocated uplink transmit resources may thus be a function of the number of terminals replying to the one access station.

In still another embodiment the total amount of uplink resource can be dynamically scaled based on statistics of reply messages received at the beginning of a time interval allocated for receiving reply messages from terminals. If the access station receives more than expected reply messages at the beginning, e.g. in the first quarter of the allocated time interval, then the access station may reduce the duration of the allocated time interval since probability is high that the expected number of reply messages is received early in the allocated time interval. In this way the allocation of transmit resources can be optimized, i.e. reduced.

In the following description the set of uplink transmit resources comprises a set of frequency bands, wherein each of the frequency bands is allocated for a time interval larger than the duration of one reply message. A terminal may thus select one of the plurality of frequency bands and an instant of time for starting transmission of its respective reply.

The terminal uses a random or pseudo-random selection process for selecting the transmit resource from the predefined set of transmit resources, wherein said selection process is based on at least one receive characteristic.

In one embodiment said receive characteristic may be the number of received encoded symbols. Alternatively or in addition the time of reception of the last received rateless encoded symbol before successful decoding may be said receive characteristic. Said characteristic may be used as a seed for said pseudo random selection process, which selects the uplink transmit resource from the set of agreed uplink transmit resources.

Note that the receive characteristics are quasi randomly distributed as described in the following.

The point in time at which a terminal receives the last encoded symbol necessary for successful decoding of the original message symbols may differ throughout the plurality of terminals. Due to the different distances of the terminals from the access station the signal propagation time differs thus affecting different symbol reception times. A closely located terminal will receive a symbol earlier than a terminal located far away, so the reception times at the terminals differ.

Furthermore channel conditions of the downlink channels may vary, i.e. from the access station to the plurality of terminals. As is known conditions of channels to terminals may differ significantly due to a plurality of effects, for example due to different distances, multipath propagation effects or frequency selectivity. Channel loss, i.e. signal attenuation, as well as interfering multipath propagation typically increases with increasing distance of a terminal from the access station. Since poor channel conditions lead to a loss of transmitted symbols, i.e. a terminal experiencing a poor channel will not receive each symbol correctly, a terminal experiencing a poor channel may need to receive more symbols than a terminal experiencing a good channel. Depending on the channel conditions the terminals may need to receive different numbers of symbols for successfully decoding the transmitted message, i.e. the original symbols.

As a consequence the characteristics of the reception process, i.e. the number of encoded symbols needed to decode the original symbols and the time of reception, can be considered as randomly distributed throughout the terminals, which in turn effect randomly distributed selections and/or computations of the uplink transmit resources, i.e. randomly distributed selections of transmit times and/or frequencies and/or CDMA codes. In this way the number of received symbols needed for successful decoding as well as the time of reception of the last needed symbol serve as a channel quality indicator (CQI) or link quality indicator (LQI), which effects the selection of the uplink transmit resources.

In one embodiment a terminal may store the number of rateless encoded symbols needed for successful decoding of the message, i.e. needed for successfully decoding the original symbols of the message from the received subset of rateless encoded symbols.

Based on that stored receive characteristic the terminal selects at least one from a plurality of uplink transmit resources and/or may compute a point in time for transmission. In one embodiment the terminal may select a point in time for transmitting an uplink message to the access station, based on the timestamp of the last reception or the number of received symbols. For example, if the last rateless encoded symbol, which was necessary for successfully decoding the transmitted message, has been received in the 17th second of the 3600 seconds of an hour, the terminal may use the number of 17 as a seed for calculating a point in time for the uplink transmission of the response message.

In addition to determining a point in time for the uplink transmission, the terminal selects one of a plurality of predefined frequency bands for transmitting its respective reply. Referring to the above noted reception in the 17th second of an hour, the terminal may use that number as a seed to randomly select one of the plurality of agreed uplink frequency bands.

In still another embodiment or in addition to selecting or computing a transmit time and/or selecting a transmit frequency for transmitting the uplink message, the terminal may select one of a plurality of predefined CDMA codes for encoding the uplink message, which the terminal may use to encode the reply message.

In addition to selecting a transmit resource based on a receive characteristic, a terminal may use a random process for varying the selection of the uplink transmit resource, wherein said additional random process is not based on a receive characteristic, to further prevent collisions of reply messages. In this way terminals will select different uplink transmit resources even when starting the selection process based on identical receive characteristics. In this way the additional random variation of the uplink transmit resources contributes to avoiding collisions of reply messages.

At method step 350 the terminal transmits the reply message to the access station in response to the received message using the selected transmit resource.

In addition to selecting a transmit resource based on a receive characteristic, a terminal may use a receive characteristic as a channel/link quality indicator (CQI/LQI) for determining its transmission parameters. If a terminal can decode the message from a comparatively small number of received symbols, channel conditions can be assumed to be good. Inversely, channel conditions can be assumed as poor, if the terminal cannot decode the message at all or needs a higher number of received symbols for decoding. As a consequence a terminal may determine transmission parameters, i.e. transmission power level and order of modulation, based on the receive characteristics.

In case of good channel conditions a terminal may choose to transmit its reply using low transmit power to save energy and/or a higher order modulation to spend less transmit time. In case of poor channel conditions, the terminal may choose high transmit power and /or a less error prone modulation with longer transmission time. In one particular embodiment, i.e. if the terminal transmits its uplink message on the same frequency as it received the symbols, i.e. the system is a time divisional duplex TDD system, channel reciprocity can be assumed, i.e. the determined receive characteristics are similar to the channel conditions for transmitting the reply message thus allowing to adapt the uplink transmission accordingly. Terminals capable of decoding the message from a comparatively small number of received symbols, i.e. terminals experiencing good channel conditions, may choose a higher order modulation such as higher order QAM and may choose to transmit using low transmission power, whereas other terminals decoding the message based on a higher number of received symbols may choose a more robust modulation scheme such as BPSK modulation and may choose to transmit at high power. Terminals experiencing good channel conditions accordingly may save energy when transmitting the reply message.

The reply message may comprise an identifier field identifying the transmitting terminal, which enables the access station to detect which terminal has transmitted a reply message.

In one embodiment the reply message may be an acknowledge message that indicates to the access station successful reception, i.e. successful decoding, of the received message.

Referring again to fig. 2, in step 240 the access station listens for and receives uplink reply messages from the terminals on the agreed uplink resources. Since the access station has knowledge about the resources from which terminals may select for transmitting, i.e. the resources for transmitting uplink reply messages to the access station have been agreed by the access station and the terminals, the access station has allotted all of the agreed transmit resources. Furthermore, since the selection of the uplink transmit resources by the terminals is randomly distributed and the particular selection is unknown at the access station, the access station will listen on each of the agreed resources.

The access station also has knowledge about the modulation schemes used by the terminals and the number of transmitted symbols. Accordingly the access station can be adapted and configured to detect reply messages modulated using different modulation schemes.

Considering that good channel conditions generally will lead to earlier transmitted reply messages, the access station may accordingly expect reply messages using a higher order modulation shortly after having transmitted the minimum number of symbols. Inversely poor channel conditions will cause later reply messages, since a higher number of symbols may be necessary for successful decoding, a more robust modulation may be expected after having transmitted a predefined number of symbols. In this way the access station may prepare to receive reply messages modulated by different modulation schemes.

In method step 250 the access station may check if a loop termination condition has been reached. In one embodiment the access station may check if a reply message has been received from each of the terminals, i.e. by checking the identifier field comprised each reply message. In another embodiment the access station may check if a predefined number of rateless encoded symbols has been transmitted or, in case of a repetition code, if a predefined number of repetitions of each symbol has been transmitted. The access station may then stop transmitting symbols of the multi- or broadcast message to the terminals.

If a termination condition is met, the access station may proceed to step 260 and stop transmitting symbols of the multi- or broadcast message to the terminals.

In one embodiment the access station may stop transmitting the rateless encoded symbols due to a loop termination condition and may then continue to listen for reply messages from the terminals for a predefined time span in method step 270.

Referring again to fig. 3 in optional step 360 a terminal may detect that the access station continues to transmit the rateless encoded message. The terminal may then enter a loop of transmitting the reply message again. After an optional timeout in method step 370 the terminal may again select a transmit resource in step 340 and transmit its uplink transmission.

Note that step 340 of selecting an uplink transmit resource optionally may lead to different selections from the predefined transmit resources each time that method step is performed to further avoid collisions of terminals transmitting uplink messages. In one embodiment step 340 may consider how many times that step has been performed to select a transmit resource different from that selected in the previous selection. In one embodiment the terminal may for example select a frequency band different from that selected for the previous uplink transmission.

In this way a terminal may optionally continue, i.e. in a loop comprising steps 340 to 370, to transmit reply messages as long as the access station transmits the rateless encoded message.

Figure 4 depicts the scheduling of transmitting the rateless encoded downlink message and the uplink message from terminals in reply thereto. In the sketch the x-axis depicts time and the y-axis depicts frequency.

Note that for the downlink transmission of the symbols a frequency f₀ has been defined, which the access station uses for transmitting the rateless encoded message. That frequency and the start time of a downlink transmission are known in each of the terminals. The terminals accordingly prepare in time to receive the message.

The uplink transmit resources, from which a terminal may select for transmitting its reply message are known in the terminals and in the access station as well, i.e. the uplink transmit resources are agreed. In the embodiment described below a plurality of five predefined frequency bands f₁ to f₅ have been communicated to and are known in the terminals. A terminal may accordingly select one of the frequency bands for uplink transmission. The access station will allocate all of the agreed resources for receiving the reply messages. In addition thereto a terminal may select from a predefined time interval a delay for transmitting its uplink message to the access station. A terminal will delay its uplink transmission by the selected delay to achieve also a distribution in time of uplink messages.

At time t=t₀ the access station begins transmission 410 of the rateless encoded message on frequency f₀, i.e. the access station performs block 220. Accordingly terminals 120b start to receive the message on that frequency f₀, i.e. terminals start the loop at step 310 to receive and decode the message.

At time t=t, the access station at step 230 has transmitted the minimum number of symbols necessary for successfully decoding the rateless encoded message. Starting at t=t, the access station has allocated each of the agreed frequencies f₁-f₅ and begins to listen for expected uplink messages, i.e. reply messages from terminals, on each of the frequencies.

In this embodiment a first terminal has received the minimum number of rateless encoded symbols wherein each symbol has been received correctly. The first terminal accordingly is capable of decoding the downlink message successfully using the minimum number of rateless encoded symbols, i.e. shortly after having received the last encoded symbol. During the reception process the terminal has determined and optionally stored the receive characteristics, i.e. the number of symbols or packets received to enable successful decoding or the time of the last symbol/packet reception.

Based on at least one of the determined receive characteristics the terminal selects one of the plurality of predefined frequencies f₁ to f₅,e.g. frequency f₂ for transmitting its uplink message 420 to the access station to acknowledge successful reception of the downlink message. In addition to selecting the frequency for its uplink transmission the terminal determines a number of time slots that shall pass before transmitting the uplink message, thus randomizing the transmission time. After having selected the transmit resources the terminal delays the transmission of the uplink message, i.e. waits for the delay time, and then transmits the message uplink. Note that a terminal may enter sleep mode for the number of time slots to pass before transmitting to save energy.

At the time t=tR1 the access station detects and receives in step 240 the message 420 from the first terminal on frequency f₂.

Also a second terminal may have successfully received the multicast downlink message from the access station using the minimum number of rateless encoded symbols. Similar as the first terminal the second terminal then selects the uplink resources, i.e. the terminal selects one of the set of frequencies f₁ to f₅ and a time delay for transmitting its respective uplink message, thus randomizing the selection of uplink resources within the agreed limits of uplink resources. Since the second terminal in this embodiment is assumed to be located farther away from the access station and due to the propagation delay, the second terminal has determined a different time, at which the last symbol of the rateless encoded message was received. As a consequence the second terminal may choose different uplink transmit resources for transmitting its uplink message 430, i.e. the terminal may choose frequency f₄ and a delay time longer than that selected by the first terminal.

At time t=t_{R2} the access station receives message 430 on frequency f₄ transmitted by the second terminal. As illustrated the second terminal 430 transmits its uplink message at a later time than the first terminal and on another frequency, i.e. using different uplink transmit resources than the first terminal, although the second terminal was also capable of decoding the message successfully from the minimum number of rateless encoded symbols.

Similarly a third terminal may have decoded the rateless encoded message successfully, may have selected uplink transmit resources and may then transmit its respective uplink message 440. The access station receives message 440 at time t=t_{R3} and on frequency f₂ and records reception of the acknowledge message from the third terminal.

Optionally the access station may keep on transmitting the rateless encoded multicast message while at the same time listening for terminal uplink messages. In one embodiment the access station stops transmitting when an uplink transmission has been received from each terminal. That indicates successful transmission of the rateless encoded multicast message to the plurality of terminals.

Alternatively the access station may stop transmitting if another condition is met. In one embodiment, i.e. at time t=t_{R4}, the access station may stop transmitting when a predefined maximum transmission time may have been reached, even if at least one reply message from a terminal has not yet been received, since in that case probability is low said at least one terminal will receive the multicast message successfully ever. Optionally the access station may continue to listen for uplink messages.

In one embodiment the access station optionally may dynamically adjust the time of transmitting the broadcast or multicast message based on statistics of reply messages received at the beginning of the time interval allocated for receiving said reply messages. In case the access station receives more than expected reply messages early in the time interval, e.g. in the first quarter of the time interval allocated for receiving reply messages, then transmission of symbols of the broadcast or multicast message may be reduced, i.e. the time allocated for transmitting said broadcast or multicast message may be reduced, since the reception of reply messages more than expected or scheduled may indicate good transmission conditions. In this way the allocation of transmit resources for transmitting the broadcast or multicast message may be optimized.

At t=t_{R4} or shortly thereafter a fourth terminal, which has received the packets/symbols of the multicast message 410, optionally may detect that transmission of said message has stopped, but cannot decode the message successfully. Optionally said terminal may then transmit a message 450 to the access station indicating that said terminal did not decode the multicast message successfully. Said message 450 may be received at t=t_{R5} by the access station. The access station may process message 450, i.e. for example in a status notification.

In this way a multicast message 410 can be transmitted to a plurality of terminals, which may transmit reply messages 420 to 450 to the access station. Due to the selection of different uplink transmit resources, the transmissions of the uplink reply messages are distributed across a plurality of orthogonal uplink transmit resources thus reducing the risk of interference between reply messages. At the same time the system allows transmission of the multicast message to a plurality of terminals and checking which of the terminals has received said message successfully by checking the identifier field in a reply message.

The described system and method steps can be implemented as an extension to a conventional radio communication system. In one embodiment the software controlling the access station may be adapted to implement the server side of the described method and system. Similarly existing machine terminals may be adapted and configured to implement the terminal side of the method and system. Hence the described system can be implemented starting from existing hardware.

## Claims

1. A radio communication method comprising the steps of:
- transmitting (220) by an access station (110) a multicast message; and
- receiving (310) the multicast message at a plurality of at least two terminals (120); and
- checking (330) successful reception of the multicast message at at least one of the plurality of terminals (120); and
- identifying by at least one of the terminals (120) at least one receive characteristic of the multicast message reception, wherein the receive characteristic comprises at least one of the number of received symbols or the number of received transmission bursts or a time, needed for successful decoding the message; and
- pseudo-randomly selecting (340) at each terminal at least one transmit resource from a plurality of predefined transmit resources for transmitting a message to the access station (110) using a pseudo-random selection process based on the receive characteristic; and
- transmitting (350) a reply message in response to the multicast message from a terminal (120) to the access station (110) using the selected transmit resource; and
- receiving the reply message at the access station (110) on the selected transmit resource.

2. The method of claim 1 wherein the multicast message is transmitted in rateless or repetition encoded symbols.

3. The method of any preceding claim wherein the transmit resource comprises at least one of a transmit frequency or a transmit time or a CDMA transmit code.

4. The method of any preceding claim wherein the transmission (350) of the reply message is initiated by successful decoding of the rateless encoded multicast message.

5. The method of any preceding claim 1-3 further comprising the step of detecting (360) that transmission of the multicast message has stopped and thereafter transmitting a reply message from the terminal to the access station.

6. The method of any preceding claim further comprising the step of logging each received reply message at the access station.

7. A radio communication system (100) comprising a radio access station (110) and radio communication terminal (120), said radio access station (110) and said radio communication terminal (120) comprising means for performing the steps of:
- transmitting (220) by the radio access station symbols of a multicast message to at least two radio communication terminals (120), and
- receiving (310) symbols of said multicast message at at least one of the radio communication terminals (120); and
- by at least one of the radio communication terminals (120) checking (330) successful reception of the multicast message; and
- identifying at least one receive characteristic of the multicast message reception by at least one of the radio communication terminals, wherein the receive characteristic comprises at least one of the number of received symbols or the number of received transmission bursts or a time, needed for successful decoding the message; and
- pseudo-randomly selecting (340) at each radio communication terminal at least one transmit resource from a plurality of predefined transmit resources for transmitting a message to the radio access station (110) using a pseudo-random selection process based on the receive characteristic; and
- transmitting (350) by at least one radio communication terminal (120) a reply message in response to the multicast message to the radio access station (110) using the selected transmit resource; and
- receiving (270) a reply message from a radio communication (120) terminal on any of the selected transmit resources by the radio access station (110).

8. The radio communication system (100) of claim 7, wherein the radio access station comprises further means for performing rateless encoding or repetition encoding of the multicast message.

9. The radio communication system (100) of any preceding claim 7-8, wherein the radio access station (110) is further adapted and configured for receiving the reply message while transmitting symbols of the multicast message.

10. The radio communication system (100) of any preceding claim 7-9, wherein the radio access station (110) is further adapted and configured for logging each reception of a reply message.

11. The radio communication system (100) of any preceding claim 7-10, wherein the radio access station (110) is further adapted and configured for allocating transmit resources for receiving reply messages from at least one of the plurality of radio communication terminals (120) after transmitting a predefined number of symbols of the multicast message.

12. The radio communication system (100) of any preceding claim 7-11 wherein the radio communication terminal (120) is further adapted and configured to determine at least one of the transmit power or the modulation scheme of the reply message based on the determined receive characteristics.

## Patentansprüche

1. Funkkommunikationsverfahren, umfassend folgende Schritte:
- Übertragen (220) einer Multicast-Mitteilung durch eine Zugangsstation (110); und
- Empfangen (310) der Multicast-Mitteilung an einer Vielzahl von mindestens zwei Endgeräten (120); und
- Überprüfen (330) des erfolgreichen Empfangs der Multicast-Mitteilung an mindestens einem der Vielzahl von Endgeräten (120); und
- Identifizieren, durch mindestens eines der Endgeräte (120), mindestens einer Empfangscharakteristik des Multicast-Mitteilungsempfangs, wobei die Empfangscharakteristik mindestens eines von der Anzahl empfangener Symbole oder der Anzahl empfangener Übertragungsbursts oder einer Zeit, die für eine erfolgreiche Dekodierung der Mitteilung benötigt wird, umfasst; und
- pseudozufälliges Auswählen (340), an jedem Endgerät, mindestens einer Übertragungsressource aus einer Vielzahl von vordefinierten Übertragungsressourcen zum Übertragen einer Mitteilung an die Zugangsstation (110) unter Verwendung eines Pseudo-Zufallsauswahlverfahrens basierend auf der Empfangscharakteristik; und
- Übertragen (350) einer Antwortmitteilung als Reaktion auf die Multicast-Mitteilung von einem Endgerät (120) an die Zugangsstation (110) unter Verwendung der ausgewählten Übertragungsressource; und
- Empfangen der Antwortmitteilung an der Zugangsstation (110) auf der ausgewählten Übertragungsressource.

2. Verfahren nach Anspruch 1, wobei die Multicast-Mitteilung in rateless- oder wiederholungskodierten Symbolen übertragen wird.

3. Verfahren nach einem der vorhergehenden Ansprüche, wobei die Übertragungsressource mindestens eines von einer Übertragungsfrequenz oder einer Übertragungszeit oder einem CDMA-Übertragungscode umfasst.

4. Verfahren nach einem der vorhergehenden Ansprüche, wobei die Übertragung (350) der Antwortmitteilung durch erfolgreiche Dekodierung der rateless-kodierten Multicast-Mitteilung eingeleitet wird.

5. Verfahren nach einem der vorhergehenden Ansprüche 1-3, ferner umfassend den Schritt des Erfassens (360), dass die Übertragung der Multicast-Mitteilung gestoppt ist, und des anschließenden Übertragens einer Antwortmitteilung vom Endgerät an die Zugangsstation.

6. Verfahren nach einem der vorhergehenden Ansprüche, ferner umfassend den Schritt des Protokollierens jeder empfangenen Antwortmitteilung an der Zugangsstation.

7. Funkkommunikationssystem (100) mit einer Funkzugangsstation (110) und einem Funkkommunikationsendgerät (120), wobei die Funkzugangsstation (110) und das Funkkommunikationsendgerät (120) Mittel zum Ausführen der folgenden Schritte umfassen:
- Übertragen (220) von Symbolen einer Multicast-Mitteilung durch die Funkzugangsstation an mindestens zwei Funkkommunikationsendgeräte (120), und
- Empfangen (310) von Symbolen der Multicast-Mitteilung an mindestens einem der Funkkommunikationsendgeräte (120); und
- durch mindestens eines der Funkkommunikationsendgeräte (120), Überprüfen des erfolgreichen Empfangs der Multicast-Mitteilung (330); und
- Identifizieren mindestens einer Empfangscharakteristik des Multicast-Mitteilungsempfangs durch mindestens eines der Funkkommunikationsendgeräte, wobei die Empfangscharakteristik mindestens eines von der Anzahl empfangener Symbole oder der Anzahl empfangener Übertragungsbursts oder einer Zeit, die für eine erfolgreiche Dekodierung der Mitteillung benötigt wird, umfasst; und
- pseudozufälliges Auswählen (340) an jedem Funkkommunikationsendgerät mindestens einer Übertragungsressource aus einer Vielzahl von vordefinierten Übertragungsressourcen zum Übertragen einer Mitteilung an die Funkzugangsstation (110) unter Verwendung eines Pseudo-Zufallsauswahlverfahrens basierend auf der Empfangscharakteristik; und
- Übertragen (350), durch mindestens ein Funkkommunikationsendgerät (120), einer Antwortmitteilung als Reaktion auf die Multicast-Mitteilung an die Funkzugangsstation (110) unter Verwendung der ausgewählten Übertragungsressource; und
- Empfangen (270) einer Antwortmitteilung von einem Funkkommunikationsendgerät (120) auf einer beliebigen der ausgewählten Übertragungsressourcen durch die Funkzugangsstation (110).

8. Funkkommunikationssystem (100) nach Anspruch 7, wobei die Funkzugangsstation weitere Mittel zum Durchführen von Rateless- oder Wiederholungskodierung der Multicast-Mitteilung umfasst.

9. Funkkommunikationssystem (100) nach einem der vorhergehenden Ansprüche 7-8, wobei die Funkzugangsstation (110) ferner dafür eingerichtet und ausgelegt ist, die Antwortmitteilung zu empfangen, während Symbole der Multicast-Mitteilung übertragen werden.

10. Funkkommunikationssystem (100) nach einem der vorhergehenden Ansprüche 7-9, wobei die Funkzugangsstation (110) ferner dafür eingerichtet und ausgelegt ist, jeden Empfang einer Antwortmitteilung zu protokollieren.

11. Funkkommunikationssystem (100) nach einem der vorhergehenden Ansprüche 7-10, wobei die Funkzugangsstation (110) ferner dafür eingerichtet und ausgelegt ist, Übertragungsressourcen zum Empfangen von Antwortmitteilungen von mindestens einem der Vielzahl von Funkkommunikationsendgeräten (120) zuzuweisen, nachdem eine vordefinierte Anzahl von Symbolen der Multicast-Mitteilung übertragen wurde.

12. Funkkommunikationssystem (100) nach einem der vorhergehenden Ansprüche 7-11, wobei das Funkkommunikationsendgerät (120) ferner dafür eingerichtet und ausgelegt ist, mindestens eines von der Übertragungsleistung oder dem Modulationsschema der Antwortmitteilung basierend auf der bestimmten Empfangscharakteristik zu bestimmen.

## Revendications

1. Procédé de communication radio comprenant les étapes consistant à :
- transmettre (220) par une station d'accès (110) un message de multidiffusion; et
- recevoir (310) le message de multidiffusion au niveau d'une pluralité d'au moins deux terminaux (120); et
- vérifier (330) la réception réussie du message de multidiffusion au niveau d'au moins l'un de la pluralité de terminaux (120) ; et
- identifier par au moins l'un des terminaux (120) au moins une caractéristique de réception du message de multidiffusion, dans lequel la caractéristique de réception comprend au moins l'un du nombre de symboles reçus ou du nombre de salves d'émission reçues ou d'un temps nécessaire à la réussite du décodage du message; et
- sélectionner de manière pseudo-aléatoire (340) au niveau de chaque terminal au moins une ressource d'émission parmi une pluralité de ressources d'émission prédéfinies pour transmettre un message à la station d'accès (110) en utilisant un processus de sélection pseudo-aléatoire basé sur la caractéristique de réception; et
- transmettre (350) un message de réponse, en réponse au message de multidiffusion, à partir d'un terminal (120) à la station d'accès (110) en utilisant la ressource d'émission sélectionnée; et
- recevoir le message de réponse au niveau de la station d'accès (110) sur la ressource d'émission sélectionnée.

2. Procédé selon la revendication 1, dans lequel le message de multidiffusion est transmis sous forme de symboles codés sans débit ou par répétition.

3. Procédé selon l'une quelconque des revendications précédentes, dans lequel la ressource d'émission comprend au moins l'un d'une fréquence d'émission ou d'un temps d'émission ou d'un code d'émission CDMA.

4. Procédé selon l'une quelconque des revendications précédentes, dans lequel la transmission (350) du message de réponse est initiée par un décodage réussi du message de multidiffusion codé sans débit.

5. Procédé selon l'une quelconque des revendications précédentes 1 à 3, comprenant en outre l'étape consistant à détecter (360) que la transmission du message de multidiffusion s'est arrêtée, puis à transmettre un message de réponse à partir du terminal à la station d'accès.

6. Procédé selon l'une quelconque des revendications précédentes, comprenant en outre l'étape consistant à enregistrer chaque message de réponse reçu au niveau de la station d'accès.

7. Système de communication radio (100) comprenant une station d'accès radio (110) et un terminal de communication radio (120), ladite station d'accès radio (110) et ledit terminal de communication radio (120) comprenant des moyens pour effectuer les étapes consistant à :
- transmettre (220), par la station d'accès radio, des symboles d'un message de multidiffusion à au moins deux terminaux de communication radio (120), et
- recevoir (310) des symboles dudit message de multidiffusion au niveau d'au moins l'un des terminaux de communication radio (120); et
- par au moins l'un des terminaux de communication radio (120), vérifier (330) la réception réussie du message de multidiffusion; et
- identifier au moins une caractéristique de réception de la réception du message de multidiffusion par au moins l'un des terminaux de communication radio, dans lequel la caractéristique de réception comprend au moins l'un du nombre de symboles reçus, du nombre de salves d'émission reçues et d'un temps nécessaire à la réussite du décodage du message; et
- sélectionner de manière pseudo-aléatoire (340) au niveau de chaque terminal de communication radio au moins une ressource d'émission parmi une pluralité de ressources d'émission prédéfinies pour transmettre un message à la station d'accès radio (110) en utilisant un processus de sélection pseudo-aléatoire basé sur la caractéristique de réception; et
- transmettre (350), par au moins un terminal de communication radio (120), un message de réponse en réponse au message de multidiffusion à la station d'accès radio (110) en utilisant la ressource d'émission sélectionnée; et
- recevoir (270) un message de réponse à partir d'un terminal de communication radio (120) sur l'une quelconque des ressources d'émission sélectionnées par la station d'accès radio (110).

8. Système de communication radio (100) selon la revendication 7, dans lequel la station d'accès radio comprend un moyen supplémentaire pour effectuer un codage sans débit ou un codage par répétition du message de multidiffusion.

9. Système de communication radio (100) selon l'une quelconque des revendications précédentes 7 à 8, dans lequel la station d'accès radio (110) est en outre conçue et configurée pour recevoir le message de réponse tout en transmettant des symboles du message de multidiffusion.

10. Système de communication radio (100) selon l'une quelconque des revendications précédentes 7 à 9, dans lequel la station d'accès radio (110) est en outre conçue et configurée pour enregistrer chaque réception d'un message de réponse.

11. Système de communication radio (100) selon l'une quelconque des revendications précédentes 7 à 10, dans lequel la station d'accès radio (110) est en outre conçue et configurée pour allouer des ressources d'émission afin de recevoir des messages de réponse à partir d'au moins un de la pluralité de terminaux de communication radio (120) après avoir transmis un nombre prédéfini de symboles du message de multidiffusion.

12. Système de communication radio (100) selon l'une quelconque des revendications précédentes 7 à 11, dans lequel le terminal de communication radio (120) est en outre conçu et configuré pour déterminer au moins l'un de la puissance d'émission ou du schéma de modulation du message de réponse sur la base des caractéristiques de réception déterminées.
